Europäisches Patentamt

European Patent Office

Office européen des brevets

(11) Numéro de publication : **0 404 880 B1**

(12) **FASCICULE DE BREVET EUROPEEN**

(45) Date de publication du fascicule du brevet :
30.09.92 Bulletin 92/40

(21) Numéro de dépôt : **89911754.3**

(22) Date de dépôt : **01.11.89**

(86) Numéro de dépôt international :
**PCT/CH89/00191**

(87) Numéro de publication internationale :
**WO 90/05070 17.05.90 Gazette 90/11**

(51) Int. Cl.⁵ : **B60B 19/00,** B62K 21/02,
B62K 25/00

(54) **VEHICULE MOTORISE OU TRACTE A ROUES SANS MOYEUX.**

(30) Priorité : **02.11.88 FR 8814529**

(43) Date de publication de la demande :
**02.01.91 Bulletin 91/01**

(45) Mention de la délivrance du brevet :
**30.09.92 Bulletin 92/40**

(84) Etats contractants désignés :
**AT BE CH DE FR GB IT LI LU NL SE**

(56) Documents cités :
**US-A- 436 844**
**US-A- 3 329 444**
**US-A- 4 045 096**
**US-A- 4 712 638**

(73) Titulaire : **SBL Société Brevets Licences S.A.**
**20, route de Prés-Bois**
**CH-1217 MEYRIN/GE (CH)**

(72) Inventeur : **SBARRO, Franco**
**CH-1422 Les Tuileries-de-Grandson (CH)**

(74) Mandataire : **Nithardt, Roland**
**Cabinet Roland Nithardt Conseils en Propriété**
**Industrielle S.A. Y-Parc Scientifique et**
**Technologique Chemin de la Sallaz**
**Casepostale 3347**
**CH-1400 Yverdon-les-Bains (CH)**

## Description

La présente invention concerne un véhicule motorisé ou tracté destiné à se déplacer sur une surface d'appui déterminée, ce véhicule comportant au moins deux roues dont au moins une roue directrice, chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement en forme d'anneau, ce premier roulement comportant au moins un élément annulaire intérieur solidaire de ladite partie centrale de la roue et au moins un élément annulaire périphérique concentrique audit élément annulaire intérieur et solidaire de ladite partie périphérique, cette dernière portant un organe de contact correspondant à la nature de la surface d'appui du véhicule et ladite partie centrale de la roue étant liée à la structure de base du véhicule en au moins une zone d'ancrage décentrée de la roue.

Ces véhicules présentent des avantages très importants par rapport aux véhicules conventionnels dont les roues comprennent un moyeu central lourd et robuste sur lequel sont montés la jante ainsi que tous les éléments de transmission et de freinage. La construction de roues sans moyeu telles que décrites dans cette demande de brevet et comprenant un roulement en forme de couronne dont l'élément extérieur porte la jante et dont l'élément intérieur est rendu solidaire des bras de suspension, permet de réduire considérablement les bras de levier pour la transmission des forces d'entraînement et de freinage, de positionner les points d'articulation de la suspension du véhicule en des points considérablement proches de la force d'appui du véhicule, et d'alléger d'un facteur élevé les moyens de couplage à la structure de base du véhicule. Toutefois, dans ces véhicules, l'articulation de la roue directrice s'effectue d'une façon conventionnelle autour d'un axe de pivotement qui passe dans le centre de la roue. Dans le cas d'un véhicule à deux roues, cette forme de réalisation impose plus ou moins la présence d'une direction classique agissant sur le bras de suspension auquel est fixé l'élément extérieur du roulement.

La présente invention se propose de réaliser une construction nouvelle qui permet d'éliminer les liaisons conventionnelles entre le guidon et la roue directrice.

Ce but est atteint par le véhicule selon l'invention, caractérisé en ce que ladite roue directrice est liée à la structure de base du véhicule par au moins un second roulement disposé dans un plan perpendiculaire au plan dudit premier roulement et comprenant un élément intérieur solidaire de l'élément annulaire intérieur dudit premier roulement et un élément extérieur solidaire de la structure de base du véhicule.

Selon une forme de réalisation préférée, l'axe dudit second roulement passe de préférence au centre de ladite zone d'ancrage décentrée de la roue.

D'une façon avantageuse, l'élément extérieur dudit second roulement est rendu solidaire d'au moins un bras de suspension du véhicule.

De préférence, la partie intérieure dudit second roulement est couplée mécaniquement à un organe de commande de la roue directrice.

La présente invention sera mieux comprise en référence à la description d'un exemple de réalisation et du dessin annexé dans lequel :

la fig. 1 représente une vue schématique d'une motocyclette selon l'invention, et

la fig. 2 illustre une forme de réalisation d'une bicyclette selon l'invention.

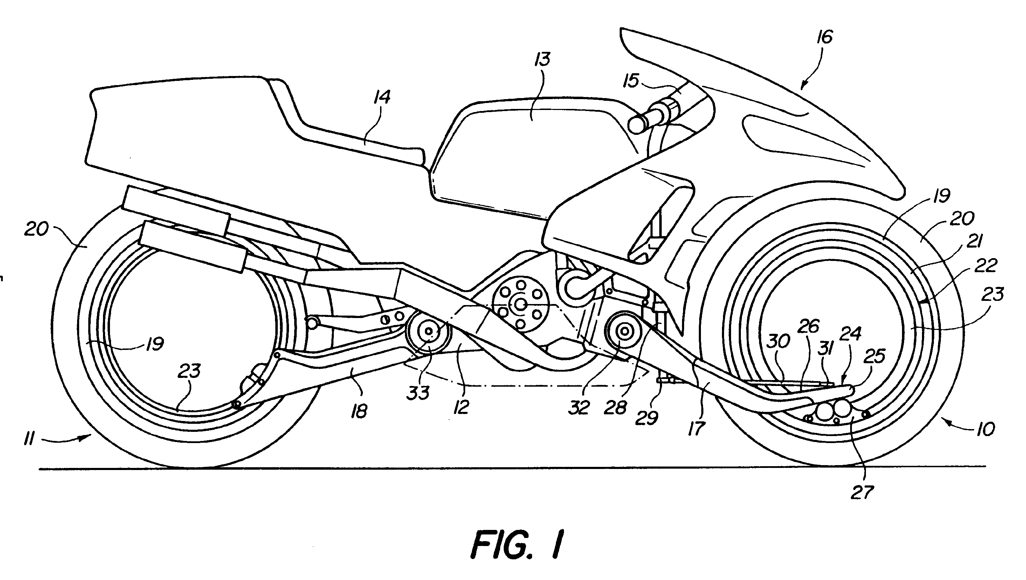

La motocyclette représentée par la fig. 1 comporte de façon connue en soi une roue avant 10, une roue arrière 11, un moteur 12, un réservoir à essence 13 et un siège 14, ces différents éléments étant habillés ou recouverts d'un carénage 16. La roue avant est couplée au moteur par l'intermédiaire d'au moins un bras 17 qui peut également se présenter sous la forme d'une fourche. La roue arrière II est de préférence tenue par un bras unique 18 qui pourrait également être remplacé par une fourche. Chacune des roues comporte une jante 19 sur laquelle est monté un pneumatique 20. La jante 19 est fixée à un élément annulaire extérieur 21 d'un roulement à billes 22 ayant la forme d'une couronne. Les bras 17 et 18 sont respectivement fixés à un élément annulaire intérieur 23 des roulements 22 correspondant respectivement aux roues avant 10 et arrière 11.

Le bras 17 porte à son extrémité antérieure un second roulement 24, en forme de couronne, dont l'élément annulaire extérieur 25 est fixé rigidement à cette extrémité du bras 17, ou tenu par les deux branches de la fourche si le bras 17 est remplacé par une fourche, et l'élément annulaire intérieur 26 de ce second roulement 24 est fixé rigidement par l'intermédiaire d'une patte 27 à l'élément annulaire intérieur 23 du premier roulement 22 de la roue avant 10 qui est la roue directrice. Ce second roulement 24 est disposé symétriquement et perpendiculairement par apport au plan du premier roulement. Son axe passe par le centre théorique de la roue.

On notera que le guidon 15 est relié à l'élément annulaire intérieur 25 du second roulement 24 au moyen d'une tringlerie comportant une tige 28 sensiblement verticale, articulée à son extrémité 29 à une tige sensiblement horizontale 30 qui est reliée audit élément annulaire 25 au moyen d'une rotule 31.

La ligne fictive reliant le point d'articulation du guidon 15 et le point de pivotement de la roue, qui correspond en fait au centre du second roulement, passe également par le centre théorique de la roue.

Dans cette forme de réalisation, les deux bras 17 et 18 sont directement articulés respectivement en 32 et 33 sur le bloc moteur lui-même ou sur un support de ce bloc. La suspension peut être réalisée selon différents principes connus, notamment au moyen d'une lame de ressort réalisée avec de la fibre de carbone et des amortisseurs traditionnels fixés aux bras 17 et 18.

Grâce à cette construction, et notamment grâce à la conception particulière des roues, les moyeux traditionnels lourds et encombrants ont totalement disparu et toutes les forces sont directement transmises aux roues en des points qui se situent le plus près possible de la zone de contact entre les pneumatiques et le revêtement routier.

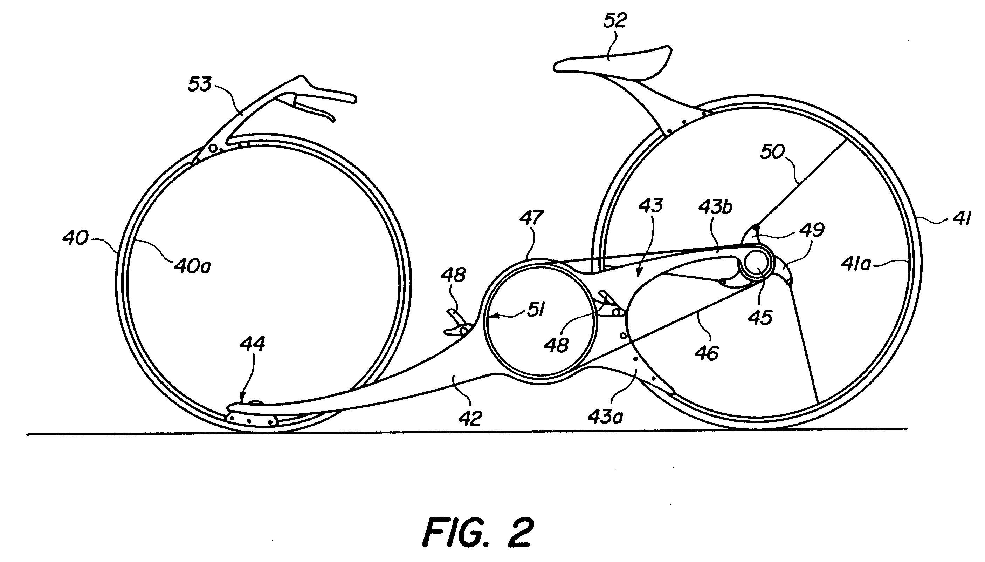

La fig. 2 illustre une bicyclette sans cadre, réalisée au moyen de roues 40 et 41 comportant chacune un roulement en forme de couronne respectivement 40a et 41a.

Le cadre, pratiquement inexistant, a été remplacé par deux bras rigides 42 et 43 dont le premier bras 42 peut se présenter sous la forme d'une fourche. A son extrémité antérieure il est fixé à un second roulement 44 dont le plan est sensiblement perpendiculaire au plan du premier roulement 40a, c'est-à-dire au plan de la roue avant 40, et dont l'axe est contenu dans ce plan.

Comme précédemment, le roulement 44 comporte un élément annulaire intérieur et un élément annulaire extérieur. L'élément annulaire extérieur est solidaire du bras ou de la fourche 42, et l'élément annulaire intérieur est solidaire de l'élément annulaire intérieur du roulement 40a.

En ce qui concerne la roue arrière 41, le roulement 41a comporte comme précédemment un élément annulaire extérieur, ce dernier étant rendu solidaire du bras 43.

On constate que le bras 43 se termine par deux éléments supports respectivement 43a et 43b, l'élément support 43a étant fixé à l'élément annulaire extérieur du roulement 41a et l'élément support 43b portant un pignon 45 qui est relié par une chaîne 46 à une roue dentée 47 solidaire des pédaliers 48. Le pignon 45 porte, par exemple, trois pattes d'entraînement 49 qui sont reliées respectivement par trois tringles 50 à l'élément annulaire intérieur du roulement 41a de la roue entraînée 41.

On notera également que la roue d'entraînement 47 ne comporte pas de moyeu. Elle est rendue solidaire de l'élément annulaire intérieur d'un roulement 51 en forme de couronne dont l'élément annulaire extérieur est rendu solidaire des bras 42 et 43.

Une selle 52 est fixée à l'élément annulaire intérieur du roulement 41a de la roue arrière 41. Un guidon 53 est fixé à l'élément annulaire intérieur du roulement 40a de la roue avant 40.

Le principe décrit ci-dessus, à savoir l'utilisation d'un second roulement disposé dans un plan perpendiculaire au plan d'une roue directrice pour assurer la fonction de direction de cette roue, s'applique également à des véhicules à quatre roues. Dans ce dernier cas, le fait de disposer de roues totalement indépendantes permet de simplifier la commande directrice différentielle des roues directrices, sachant que pour assurer la meilleure tenue de route dans un virage, la roue intérieure doit faire un angle plus grand que la roue extérieure par rapport à l'axe du véhicule.

## Revendications

1. Véhicule motorisé ou tracté destiné à se déplacer sur une surface d'appui déterminée, ce véhicule comportant au moins deux roues (10, 11; 40, 41) dont au moins une roue directrice, chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement (22; 40, 40a) en forme d'anneau, ce premier roulement comportant au moins un élément annulaire intérieur solidaire de ladite partie centrale de la roue et au moins un élément annulaire périphérique concentrique audit élément annulaire intérieur et solidaire de ladite partie périphérique, cette dernière portant un organe de contact correspondant à la nature de la surface d'appui du véhicule et ladite partie centrale de la roue étant liée à la structure de base du véhicule en au moins une zone d'ancrage décentrée de la roue, caractérisé en ce que ladite roue directrice est liée à la structure de base du véhicule par au moins un second roulement (24, 44) disposé dans un plan perpendiculaire au plan dudit premier roulement (22; 40a, 41a) et comprenant un élément intérieur (26) solidaire de l'élément annulaire intérieur dudit premier roulement et un élément extérieur (25) solidaire de la structure de base du véhicule.

2. Véhicule selon la revendication 1, caractérisé en ce que l'axe dudit second roulement passe au centre de ladite zone d'ancrage décentrée de la roue.

3. Véhicule selon la revendication 1, caractérisé en ce que l'élément extérieur (25) dudit second roulement est rendu solidaire d'au moins un bras de suspension (17) du véhicule.

4. Véhicule selon la revendication 1, caractérisé en ce que la partie intérieure (23) dudit second roulement est couplée mécaniquement à un organe de commande de la roue directrice.

**Patentansprüche**

1. Kraft- oder Schleppfahrzeug zur Fortbewegung auf einer bestimmten Auflagefläche, wobei dieses Fahrzeug mindestens zwei Räder (10, 11; 40, 41) aufweist, wovon mindestens eines ein Lenkrad ist, und jedes dieser Räder aus einem inneren, mit einer Grundstruktur des Fahrzeugs verbundenen Teil und einem zu diesem inneren Teil konzentrischen peripheren Teil besteht, der so gestaltet ist, daß er sich um letzteren dreht und der innere Teil und der periphere Teil durch mindestens ein ringförmiges Wälzlager (22; 40, 40a) miteinander verbunden sind, wobei dieses erste Wälzlager mindestens ein ringförmiges, mit dem inneren Teil des Rades fest verbundenes inneres Element und mindestens ein ringförmiges, zu dem inneren ringförmigen Element konzentrisches, peripheres und fest mit dem peripheren Teil verbundenes Element aufweist, wobei letzteres ein, der Beschaffenheit der Auflagefläche für das Fahrzeug entsprechendes Kontaktorgan trägt und wobei der innere Teil des Rades in mindestens einer exzentrisch zum Rad liegenden Aufhängung mit der Grundstruktur des Fahrzeugs verbunden ist, **dadurch gekennzeichnet** daß das Lenkrad mit der Grundstruktur des Fahrzeugs über mindestens ein zweites Wälzlager (25, 44) verbunden ist, das in einer, zur Ebene des ersten Wälzlagers (22; 40a, 41a) senkrechten Ebene angeordnet ist und aus einem inneren Element (26) besteht, das fest mit dem inneren ringförmigen Element des ersten Wälzlagers verbunden ist, und einem fest mit der Grundstruktur des Fahrzeuges verbundenen äußeren Element (25).

2. Fahrzeug nach Anspruch 1, **dadurch gekennzeichnet** , daß die Achse des zweiten Wälzlagers vorzugsweise zur Mitte der exzentrischen Aufhängung des Rades verläuft.

3. Fahrzeug nach Anspruch 1, **dadurch gekennzeichnet** , daß das äußere Element (25) des zweiten Wälzlagers mit mindestens einem Gabelarm (17) des Fahrzeugs fest verbunden ist.

4. Fahrzeug nach Anspruch 1, **dadurch gekennzeichnet** , daß der innere Teil (23) des zweiten Wälzlagers mechanisch mit einem Steuerorgan für das Lenkrad verbunden ist.

**Claims**

1. A motorized or engine driven vehicle designed to travel on a particular surface, said vehicle comprising at least two wheels (10, 11; 40, 41), at least one of which is a drive wheel, each wheel comprising a central portion connected to the base structure of the vehicle and a peripheral portion concentric to the said central portion and disposed to rotate around the latter, the said central portion and the said peripheral portion being interconnected by at least a first ring shaped bearing (22; 40a, 41a), said first bearing comprising at least one interior annular element connected to the said central portion of the wheel and at least one peripheral annular element concentric to the said interior annular element and connected to the said peripheral portion, said latter portion having a contact means corresponding to the type of the surface with which the vehicle will be in contact, and the said central portion of the wheel being connected to the base structure of the vehicle at at least one off-center anchoring point on the wheel, characterized in that the said drive wheel is connected to the base structure of the vehicle by at least one second bearing (24, 44) disposed in a plane perpendicular to the plane of the said first bearing (22; 40a, 41a) and comprising an interior element (26) connected to the interior annular element of the said first bearing and an exterior element (25) connected to the base structure of the vehicle.

2. A vehicle according to claim 1, characterized in that the axis of the said second bearing passes through the center of the off-center anchoring zone on the wheel.

3. A vehicle according to claim 1, characterized in that the exterior element (25) of the said second bearing is connected to at least one suspension arm (17) of the vehicle.

4. A vehicle according to claim 1, characterized in that the interior portion (23) of said second bearing is mechanically joined to a drive means for the drive wheel.

FIG. I

EP 0 404 880 B1

*FIG. 2*

EP 0 404 880 B1